# EUROPEAN PATENT SPECIFICATION

(11) **EP 2 075 797 B1**
(45) Date of publication and mention of the grant of the patent: **09.11.2011**
(21) Application number: 08172961.8
(22) Date of filing: 29.12.2008
(51) Int. Cl.: G11B 27/10, H04N 5/76, G11B 20/10

(54) **Content playback apparatus**
Inhaltswiedergabevorrichtung
Appareil de lecture de contenu

(30) Priority: 28.12.2007 JP 2007340244
(43) Date of publication of application: 01.07.2009
(73) Proprietor: Panasonic Corporation, Kadoma-shi Osaka 571-8501 (JP)
(72) Inventor: Tsukamoto, Yoshihiro, Osaka-shi Osaka 540-6202 (JP)
(74) Representative: Grünecker, Kinkeldey, Stockmair & Schwanhäusser

(56) References cited:
- EP-A- 1 288 951
- EP-A- 1 681 872
- WO-A-2006/103602
- JP-A- 2007 250 097
- US-A1- 2006 002 261

## Description

### BACKGROUND

This invention relates to a content playback apparatus and in particular to a content playback apparatus including a resume function for performing playback resume operation at the stop position if the playback operation is stopped while content is being played back.

The resume playback function of the content playback apparatus is a function of storing the previous playback point of content and playing back the content starting at the point continued from the previous point when the content is played back next time. However, according to the resume playback functions if playing back of recorded content of TV, etc., is stopped at a point where the main part has ended and only an advertisement remains, the later playback will be started at the point although the main part will not be played back.

Then, a method of acquiring the playback point at the stop time and determining whether resume playback at the next playback time is to be set to ON or OFF according to the time is proposed. Specifically, if "playback stop position/total playback time" exceeds a given ratio, the resume function is set to OFF. For example, when a 60-minute moving video picture has been played back 90% or more (namely, has been played back 54 minutes or more), the resume function is set to OFF. (For example, refer to JP-A-2004-207935)

The above-mentioned patent document discloses a resume playback method not uniquely determining the playback resume position, but the method does not provide sufficiently good ease of operation. That is, if the resume function is set to ON or OFF by only determination based on the playback stop position, the following disadvantages may occur.

For example, if playback is stopped because content is checked and is not expected content, the content will be resumed at the playback stop position. That is, although the content is played back to the position without the intention of viewing the content, the next playback of the content will be resumed at the position. For example, although the user wants to view content stopped at a midpoint six months ago from the beginning because the user does not remember the viewed part of the content, the content will be played back starting at the midpoint. Further, for example, if a person viewing content differs, he or she will view the part continued from the part played back by anther person.

### SUMMARY

It is therefore an object of the invention to provide a content playback apparatus capable of preventing playback from being started at an inappropriate position not desired by the user and improving ease of operation of a resume function.

In order to achieve the above object, according to the present invention, there is provided a content playback apparatus in accordance with claim 1.

According to the configuration described above, the actual playback time of actually playing back content is measured and if the ratio of the actual playback time to the content playback time is the predetermined threshold value or less or the predetermined threshold value or more, the resume function is set to OFF and playing back the content is started from the beginning of the content. Accordingly, for example, if the ratio of the actual playback time to the total playback time is 10% or less and the user has not viewed the content so much (for example, if the user has checked the content and found it unexpected content and thus stopped the playback, etc.,) or if the ratio of the actual playback time to the total playback time exceeds 90% and the user has almost completed viewing the content, playing back the content at the next playback time will be started from the beginning of the content, so that ease of operation of the resume function can be improve.

### BRIEF DESCRIPTION OF THE DRAWINGS

The above objects and advantages of the present invention will become more apparent by describing in detail preferred exemplary embodiments thereof with reference to the accompanying drawings, wherein:

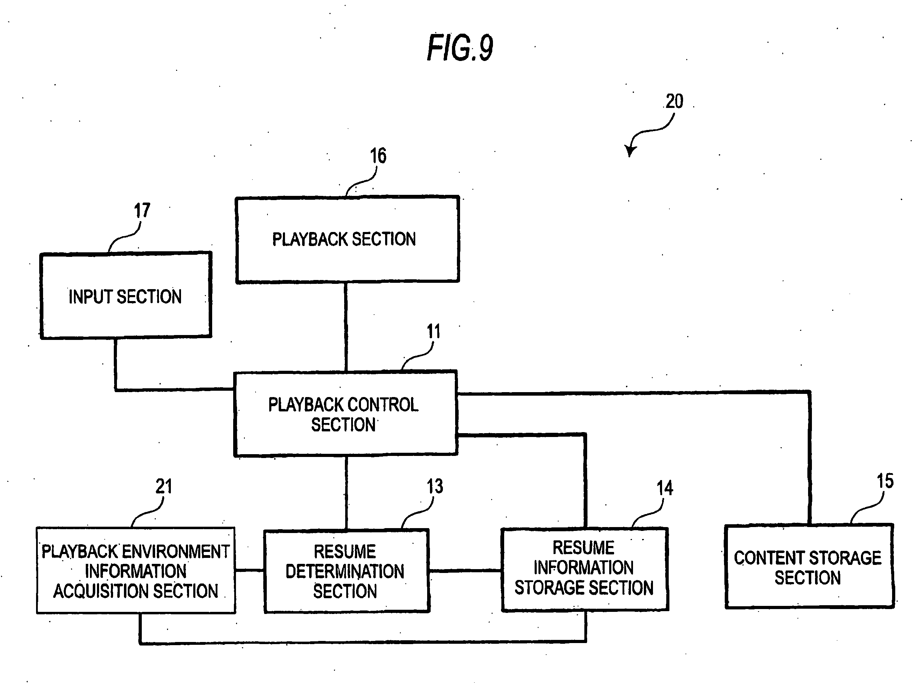

FIG. 9 is a schematic representation of an example of a content playback state of a content playback apparatus according to a first embodiment of the invention;
FIG. 2 is a diagram to show an example of the schematic configuration of the content playback apparatus according to the first embodiment of the invention;
FIG. 3 is a drawing to show an example of a processing flow when the content playback apparatus according to the first embodiment of the invention starts to play back content;
FIG. 4 is a flowchart to show the example of the processing flow when the content playback apparatus according to the first embodiment of the invention starts to play back content;
FIG. 5 is a drawing to show an example of a processing flow when the content playback apparatus according to the first embodiment of the invention performs operation (temporarily halt, fast forward, or fast rewind) during content playback;
FIG. 6 is a flowchart to show the example of the processing flow when the content playback apparatus according to the first embodiment of the invention performs operation (temporarily halt, fast forward, or fast rewind) during content playback;
FIG. 7 is a drawing to show an example of a processing flow when the content playback apparatus according to the first embodiment of the invention stops playing back content;
FIG. 8 is a flowchart to show the example of the processing flow when the content playback apparatus according to the first embodiment of the invention stops playing back content;
FIG. 9 is a diagram to show an example of the schematic configuration of a content playback apparatus according to a second embodiment of the invention;
FIG. 10 is a drawing to show an example of a processing flow when the content playback apparatus according to the second embodiment of the invention starts to play back content;
FIG. 11 is a flowchart to show the example of the processing flow when the content playback apparatus according to the second embodiment of the invention starts to play back content;
FIG. 12 is a drawing to show an example of a processing flow when the content playback apparatus according to the second embodiment of the invention stops playing back content; and
FIG. 13 is a flowchart to show the example of the processing flow when the content playback apparatus according to the second embodiment of the invention stops playing back content.

### DETAILED DESCRIPTION OF EXEMPLARY EMBODIMENTS

A content playback apparatus according to each embodiment of the invention will be discussed below with reference to the accompanying drawings:

The content playback apparatus according to each embodiment of the invention determines whether resume playback is to be set to ON or OFF according to the actual playback time. That is, (1) a comparison is made between the actual playback time (if the playback position is advanced by fast forward, etc., the time is not counted as the actual playback time) and the total playback time of the content and whether resume playback is to be set to ON or OFF is determined. (2) Environmental information at the previous playback time (playback date and time, playback person, etc.,) is retained and then is compared with environmental information at the present playback time and whether resume playback is to be set to ON or OFF is determined.

As the content playback apparatus according to each embodiment of the invention, for example, a mobile telephone terminal as an example of a content playback apparatus including a resume function or the like is possible. The resume function is a function for performing playback resume operation at the stop position if the playback operation is stopped while content is being played back.

### (First embodiment)

A situation in which a content playback apparatus according to a first embodiment of the invention is used is, for example, the case where the user, wanting to playback a certain content, searching to see if the content is what he or she wants. In this case, to play back the content to check it, the user fast-forwards to a position where the content can be checked, and checks the content.

If the user finds that the content differs from expected content after playing back about 10 seconds, for example, the user decides to stop the playback. In this case, the user does not desire to play back from the stop position at the next playback time, namely, desires to turn off resume.

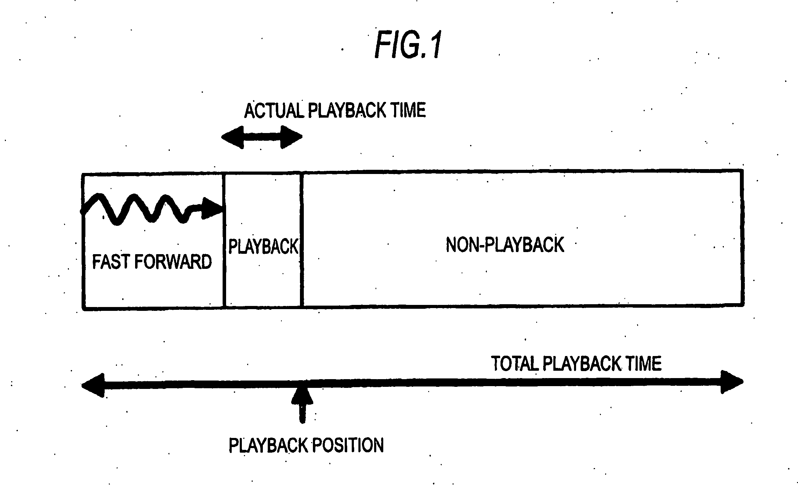

The content playback apparatus according to the first embodiment of the invention acquires the actual playback time and determines whether resume playback at the next playback time is to be set to ON or OFF based on the time information, whereby if the user checks the content and finds it unexpected content and thus stops playback, resume playback at the playback stop position can be prevented. FIG. 1 is a schematic representation of an example of a content playback state. The actual playback time refers to the actually playing back time. If the elapsed time (= present playback position) is advanced by fast-forwarding, etc., the time is not counted as the actual playback time.

In a resume ON/OFF determination method in the content playback apparatus of the embodiment, if the actual playback time is short, resume is set to OFF. If "actual playback time/total playback time" is a given value or less, resume may be set to OFF. The playback time of playback at predetermined speed to such an extent that the user can understand the content (fast playback) such as double-speed playback is also contained in the actual playback time.

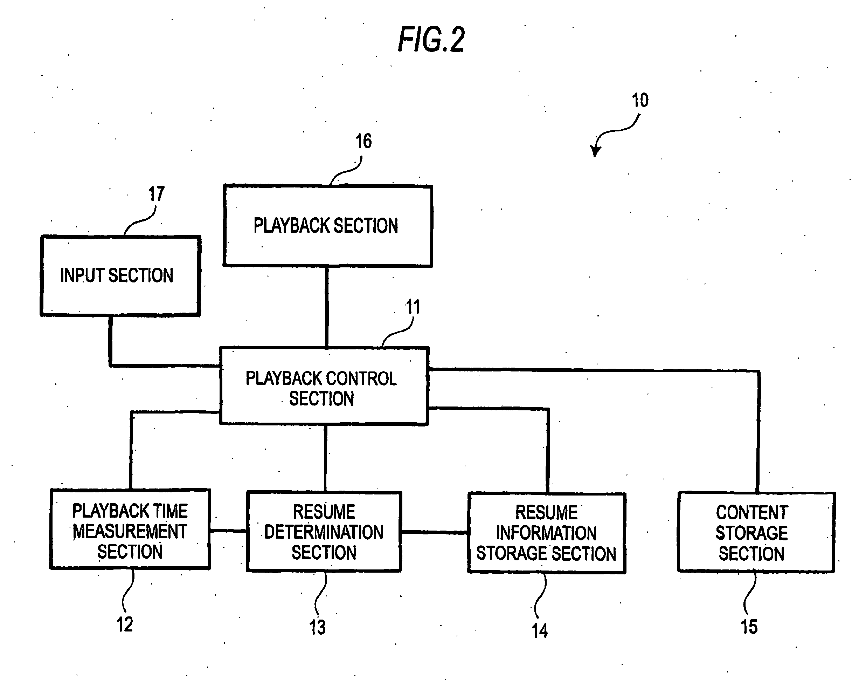

FIG. 2 is a diagram to show an example of the schematic configuration of the content playback apparatus according to the first embodiment of the invention. A content playback apparatus 10 shown in FIG. 2 is made up of a playback control section 11, a playback time measurement section 12, a resume determination section 13, a resume information storage section 14, a content storage section 15, a playback section 16, and an input section 17.

The playback control section 11 acquires content from the content storage section 15 and controls a playback mode of playback, stop, fast forward, rewind, etc., for the acquired content. At the playback start time, the playback control section 11 1 plays back content in accordance with resume information (playback starting at continuation from the previous playback part/playback from the beginning). The playback control section 11 has a function to determine that the start position of the playback resume operation is the top of content if the ratio of the actual playback time to a predetermined playback time is a predetermined first threshold value or less or is a predetermined second threshold value or more. It also has a function to determine that the start position of the playback resume operation is the top of content if the actual playback time is a predetermined threshold value or less.

The playback time measurement section 12 measures the actual playback time required for resume determination, receives a playback mode change notification from the playback control section 11, and starts, terminates, or temporarily halts the measurement with the notification as a trigger. Upon reception of a playback termination notification, the playback time measurement section 12 passes the measured actual playback time to the resume determination section 13. The playback time measurement section 12 also has a function to measure the actual playback time of actually playing back content according to input of playback operation through the input section 17.

The resume determination section 13 determines whether or not resume playback is to be enabled at the next playback time. It also has a function to make a comparison between the ratio of the actual playback time to a predetermined playback time and the predetermined first threshold value or the predetermined second threshold value larger than the predetermined first threshold value and a function to make a comparison between the actual playback time and the predetermined threshold value.

The resume information storage section 14 stores resume information related to each content. The playback stop position, etc., is recorded in the resume information.

The content storage section 15 stores various contents.

The playback section 16 plays back various contents based on a command from the playback control section 11.

The input section 17 accepts various operation inputs.

Next, an example of a processing flow when the content playback apparatus 10 starts to play back content will be discussed.

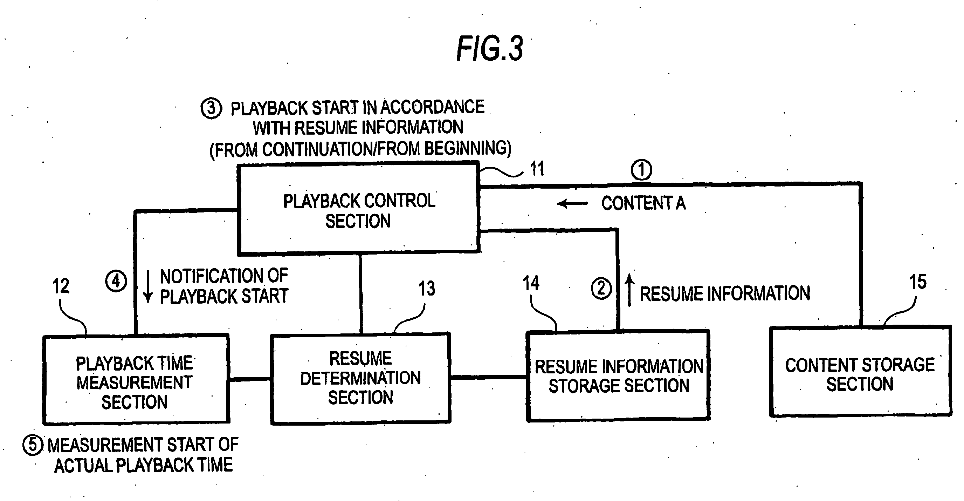

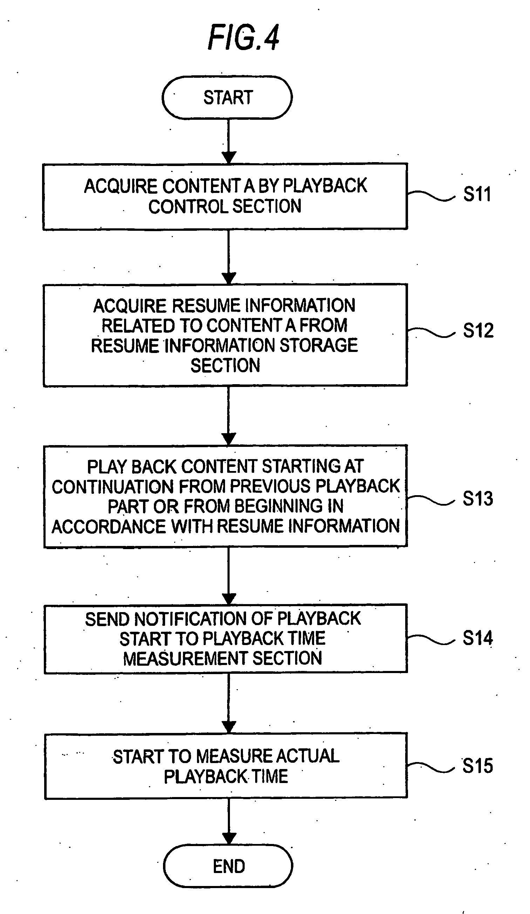

FIG. 3 is a drawing to show an example of a processing flow when the content playback apparatus 10 of the embodiment starts to play back content. FIG. 4 is a flowchart to show the example of the processing flow. The processing in FIGs. 3 and 4 is started when the input section 17 inputs a. playback command of remote control operation, etc., (playback operation) from the user and sends a playback command of content A to the playback control section 11, for example.

To begin with, at step S11 in FIG. 4, the playback control section 11 acquires the content A from the content storage section 15.

Subsequently, at step S12, the playback control section 11 acquires resume information related to the content A from the resume information storage section 14.

Subsequently, at step S13, the playback control section 11 plays back the content starting at continuation from the previous playback part or from the beginning in accordance with the resume information.

Subsequently, at step S14, the playback control section 11 sends a notification of the playback start to the playback time measurement section 12.

Subsequently, at step S15, the playback time measurement section 12 starts to measure the actual playback time. The point to be noted is that the playback time measurement section 12 starts to measure the actual playback time only when content is played back.

Next, an example of a processing flow when the content playback apparatus 10 performs operation (temporarily halt, fast forward, or fast rewind) during content playback will be discussed.

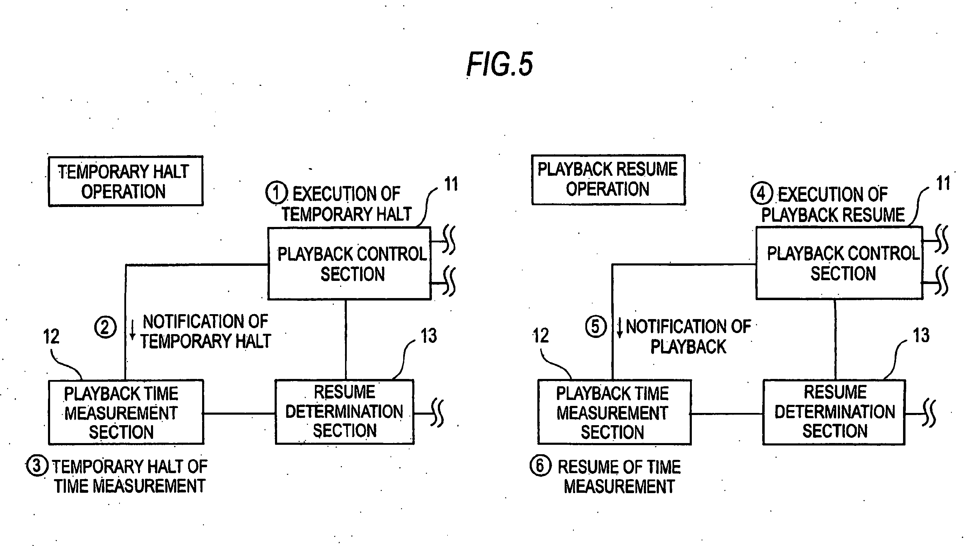

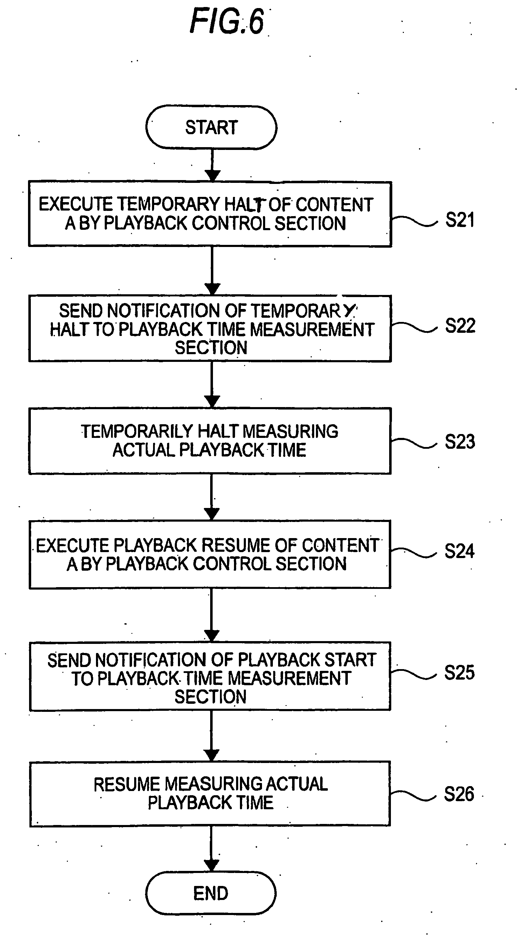

FIG. 5 is a drawing to show an example of a processing flow when the content playback apparatus 10 performs operation (temporarily halt, fast forward, or fast rewind) during content playback. FIG. 6 is a flowchart to show the example of the processing flow. The processing in FIGs. 5 and 6 is started when the input section 17 inputs remote control operation from the user (temporarily halt, fast forward, or fast rewind) at the time of playing back the content A, for example. FIG. 6 shows the processing flow of only temporary halt operation.

To begin with, at step S21 in FIG. 6, the playback control section 11 executes temporarily halt, fast forward, or fast rewind of the content A.

Subsequently, at step S22, the playback control section 11 sends a notification of temporarily halt, fast forward, or fast rewind to the playback time measurement section 12.

Subsequently, at step S23, the playback time measurement section 12 temporarily halts measuring the actual playback time. In this case, the time counting remains to be stopped. The measurement time is not reset.

Subsequently, at step S24, if the input section 17 inputs a playback resume command from the user, the playback control section 11 executes playback resume of the content A.

Subsequently, at step S25, the playback control section 11 sends a notification of playback start to the playback time measurement section 12.

Subsequently, at step S2S, the playback time measurement section 12 resumes measuring the actual playback time. That is, the time measurement stopped at step S23 is resumed. The point to be noted is that the time measurement is temporarily stopped except when the content is played back.

Next, an example of a processing flow when the content playback apparatus 10 stops playing back content will be discussed.

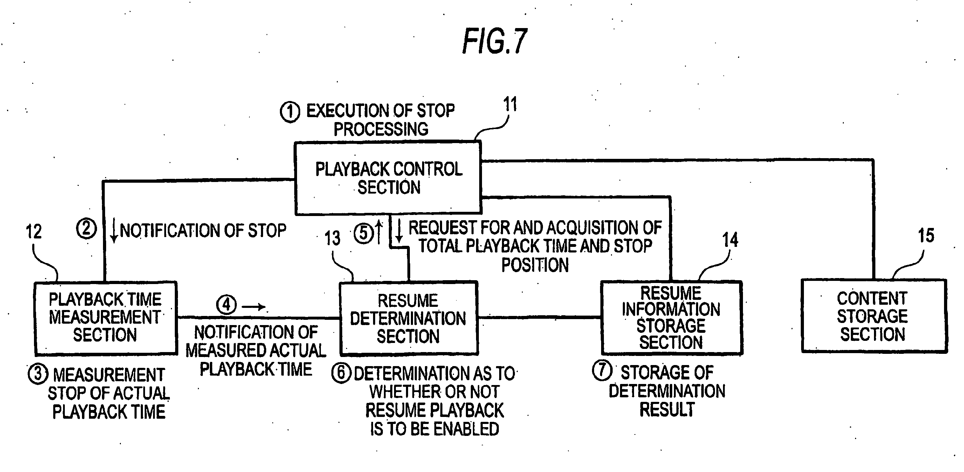

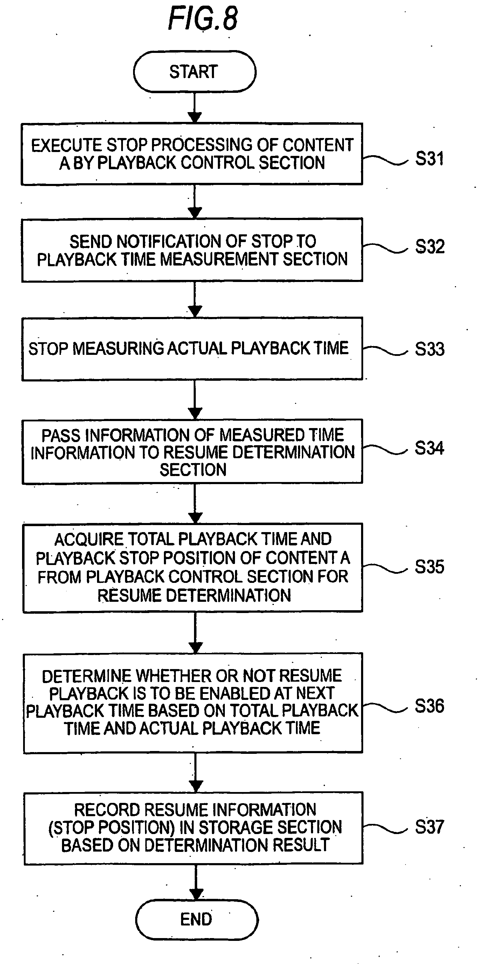

FIG. 7 is a drawing to show an example of a processing flow when the content playback apparatus 10 stops playing back content. FIG. 8 is a flowchart to show the example of the processing flow. The processing in FIGs. 7 and 8 is started when the input section 17 inputs a stop command entered by remote control operation of the user when the content A is played back, temporarily halted, fast-forwarded, or fast rewound, for example.

To begin with, at step S31 in FIG. 8, the playback control section 11 executes stop processing of the content A.

Subsequently, at step S32, the playback control section 11 sends a notification of stop to the playback time measurement section 12.

Subsequently, at step S33, the playback time measurement section 12 stops measuring the actual playback time.

Subsequently, at step S34, the playback time measurement section 12 passes information of the measured actual playback time to the resume determination section 13.

Subsequently, at step S35, the resume determination section 13 acquires information of the total playback time of the content A and information of the playback stop position of the content A from the playback control section 11 for resume determination.

Subsequently, at step S36, the resume determination section 13 determines whether or not resume playback is to be enabled at the next playback time based on the total playback time and the actual playback time.

As an example of a determination method, any of the following can be used:
- If the actual playback time is within three minutes, resume playback will not be executed at the next playback time.
- If the ratio of the actual playback time to the total playback time exceeds 90%, resume playback will not be executed.
- If the ratio of the actual playback time to the total playback time is 10% or less, resume playback will not be executed.

Subsequently, at step S37, if the resume determination section 13 determines that resume playback is to be executed, based on the determination result, the resume determination section 13 records resume information (containing the playback stop position) in the resume information storage section 14. If it is determined that resume playback is not executed, stop position information is set to 00:00:00. If it is determined that resume playback is not executed, the resume information can also be deleted from the resume information storage section 14. The points to be noted are that whether or not resume playback is to be enabled at the next playback time is determined based on the total playback time and the actual playback time and that whether or not resume playback is to be enabled is determined at the present playback stop time rather than at the next content playback resume time.

Thus, according to the content playback apparatus 10 of the embodiment, the actual playback time of actually playing back content is measured and if the actual playback time is the predetermined threshold value or less, playing back the content is started from the beginning of the content. Accordingly, if the user checks the content and finds it unexpected content and thus stops playback, for example, if the actual playback time is 10 seconds or less, playing back the content at the next playback time will be started from the beginning of the content, and ease of operation of the resume function can be improved.

The actual playback time of actually playing back content is measured and if the ratio of the actual playback time to the content playback time is the predetermined threshold value or less or the predetermined threshold value or more, playing back the content is started from the beginning of the content. Accordingly, for example, if the ratio of the actual playback time to the total playback time is 10% or less and the user has not viewed the content so much or if the ratio of the actual playback time to the total playback time exceeds 90% and the user has almost completed viewing the content, playing back the content at the next playback time will be started from the beginning of the content, and ease of operation of the resume function can be improved.

The following embodiment is shown for illustrational purposes only.

A situation in which a content playback apparatus according to a second embodiment of the invention is used is, for example, the case where a sister played back content and stopped at a midpoint at the previous playback time and a younger brother will play back the content this time. In this case, the younger brother does not want to view the content starting at the continuation from the part stopped by the sister and desires to play back the content from the beginning. Likewise, for example, to view the program viewed to a midpoint six months ago, the user does not remember the viewed part of the content and thus desires to play back the content from the beginning rather than from the continuation.

The content playback apparatus according to the second embodiment of the invention stores playback environment information and determines whether resume playback Is to be set to ON or OFF from the previous playback environment information, whereby, for example, if the user views one content after a long time, the content playback apparatus can play back the content from the beginning or if a different person views one content, the content playback apparatus can play back the content from the beginning. The playback environment information is information storing the state at the previous playback time; for example, it contains information indicating who played back, the playback date and time, etc.

A resume ON/OFF determination method in the content playback apparatus of the embodiment is (1) to set resume to OFF if a different person plays back one content. The person who plays back content is determined using an SIM card (for example, to view a moving video picture on a mobile telephone), fingerprint authentication (for example, to register fingerprint in the remote control), etc., for example. In (2), a comparison is made between the previous playback time (date and time) and the present playback time (date and time) and when a predetermined time period has elapsed since the previous playback time, resume is set to OFF. The duration of the OFF determination time period can be changed.

FIG. 9 is a diagram to show an example of the schematic configuration of the content playback apparatus according to the second embodiment of the invention. A content playback apparatus 20 shown in FIG. 9 is made up of a playback control section 11, a resume determination section 13, a resume information storage section 14, a content storage section 15, a playback section 16, an input section 17, and a playback environment information acquisition section 21.

The playback control section 11 acquires content from the content storage section 15 and controls a playback mode of playback, stop, fast forward, rewind, etc., for the acquired content. At the playback start time, the playback control section 11 plays back content in accordance with resume information (playback starting at continuation from the previous playback part/playback from the beginning). The playback control section 11 has a function to determine that the start position of the playback resume operation is the top of content if the elapsed time from the previous playback time to the present playback resume time is a predetermined threshold value or more. It also has a function to determine that the start position of the playback resume operation is the top of content if information of a first user and information of a second user do not match.

The playback environment information acquisition section 21 acquires playback environment information (information about the state at the playback time). For example, information acquired as the playback environment information is the name of the user playing back content, user identification information, the present date and time, etc. The playback environment information acquisition section 21 has a function to acquire information of the time of resuming playing back content at this time and the information of the second user.

The resume determination section 13 makes a comparison between the playback environment information in the resume information and the present playback environment information and determines whether or not resume playback is to be enabled. It also has a function to make a comparison between the elapsed time from the previous playback time to the present playback resume time and the predetermined threshold value and a function to make a comparison between information of the first user and information of the second user.

The resume information storage section 14 stores resume information related to each content. In addition to the playback position, the information acquired in the playback environment information is stored in the resume information. The resume information storage section 14 also stores information of the previous content playback time and the first user information.

The content storage section 15 stores various contents.

The playback section 16 plays back various contents based on a command from the playback control section 11.

The input section 17 accepts various operation inputs.

Next, an example of a processing flow when the content playback apparatus 20 starts to play back content will be discussed.

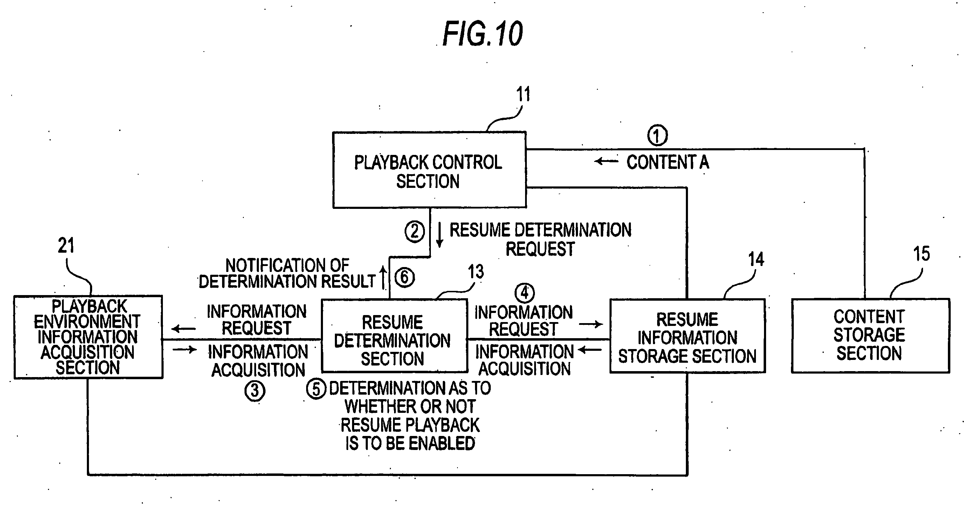

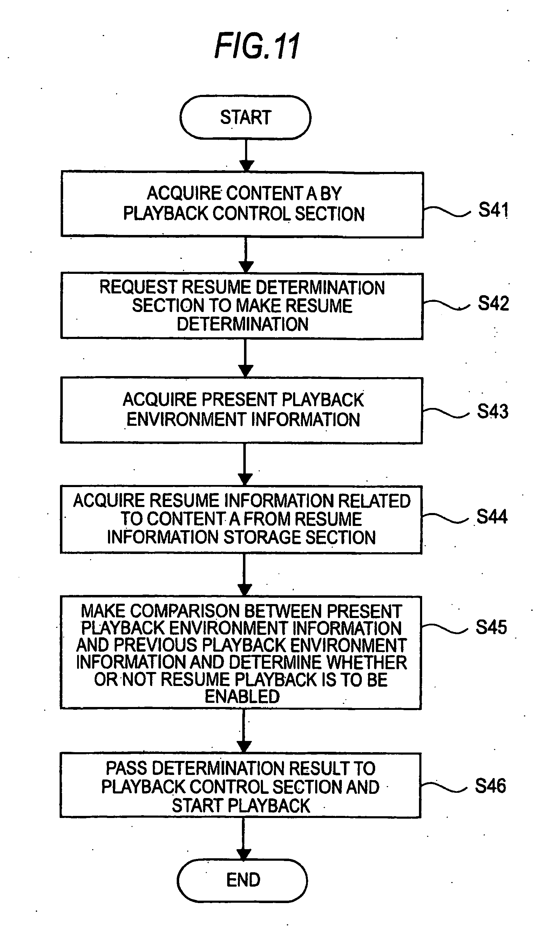

FIG. 10 is a drawing to show an example of a processing flow when the content playback apparatus 20 of the embodiment starts to play back content. FIG. 11 is a flowchart to show the example of the processing flow. The processing in FIGs. 10 and 11 is started when the input section 17 inputs a playback command of remote control operation, etc., from the user and sends a playback command of content A to the playback control section 11. for example.

To begin with, at step S41 in FIG. 11, the playback control section 11 acquires the content A from the content storage section 15.

Subsequently, at step S42, the playback control section 11 requests the resume determination section 13 to make a resume determination.

Subsequently, at step S43, the resume determination section 13 acquires the present playback environment information from the playback environment information acquisition section 21.

At step S44, the resume determination section 13 acquires the resume information related to the content A from the resume information storage section 14. The playback environment information at the previous playback time is recorded in the resume information.

At step S45, the resume determination section 13 makes a comparison between the present playback environment information and the previous playback environment information and determines whether or not resume playback is to be enabled.

At step S46, the resume determination section 13 passes the determination result to the playback control section 11 and playback is started. To execute resume playback, a notification of the resume position is sent. The points to be noted are that a comparison is made between the previous playback environment information and the present playback environment information and whether or not resume playback is to be enabled is determined and that whether or not resume playback is to be enabled is determined at the playback start time.

Next, an example of a processing flow when the content playback apparatus 20 stops playing back content will be discussed.

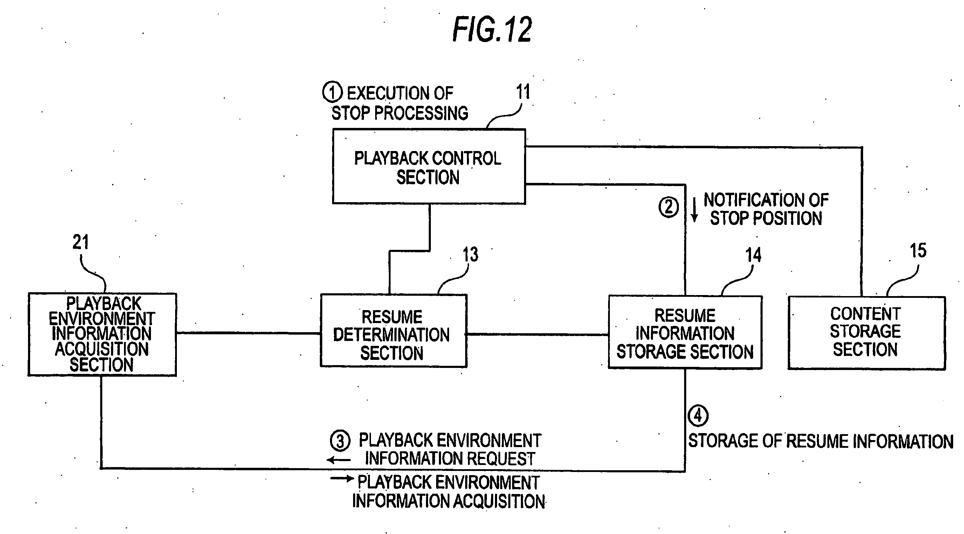

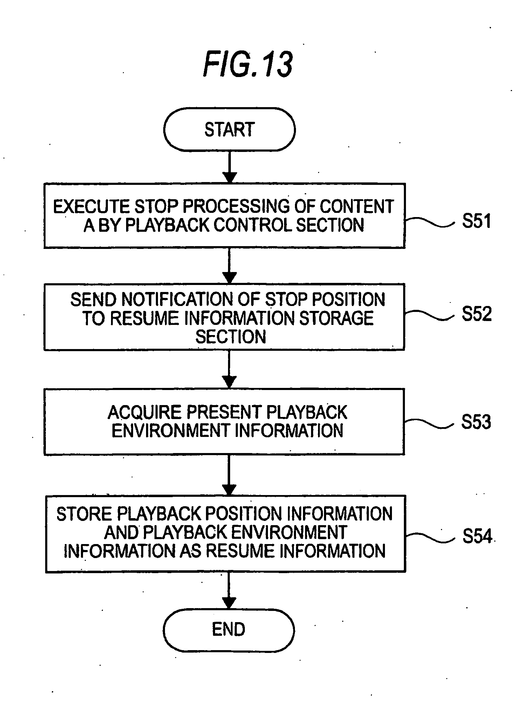

FIG. 12 is a drawing to show an example of a processing flow when the content playback apparatus 20 stops playing back content. FIG. 13 is a flowchart to show the example of the processing flow. The processing in FIGs. 12 and 13 is started when the input section 17 inputs a stop command entered by remote control operation of the user when the content A is played back, temporarily halted, fast-forvvarded, or fast rewound, for example.

To begin with, at step S51 in FIG. 13, the playback control section 11 executes stop processing of the content A.

Subsequently, at step S52, the playback control section 11 sends a notification of the stop position to the resume information storage section 14.

At step S53, the resume information storage section 14 acquires the present playback environment information from the playback environment information acquisition section 21.

At step S54, the playback environment information acquisition section 21 stores playback position information and the playback environment information in the resume information storage section 14 as the resume information. The point to be noted is that the playback environment information and stop position information are stored-at the stop time.

Thus, if the elapsed time from the previous playback time of content to the present playback resume time of the content is the predetermined threshold value or more, the content playback apparatus 20 of the embodiment starts playing back the content from the beginning. Accordingly, as for the content stopped at a midpoint six months ago, for example, playing back the content is started at the beginning position desired by the user and ease of operation of the resume function can be improved.

If the information of the first user playing back the content at the previous time and the information of the second user resuming playing back the content at this time do not match, playing back the content is started from the beginning. Accordingly, for example, if a different user views the content, playing back the content is started at the beginning position and ease of operation of the resume function can be improved.

The invention is useful as a content playback apparatus, etc., capable of preventing playback from being started at an inappropriate position not desired by the user and improving ease of operation of the resume function.

## Claims

1. A content playback apparatus including a resume function for resuming playback operation if playback operation is stopped while content is being played back, the content playback apparatus comprising:
a playback section (16) for playing back content having a predetermined playback time; and
an input section (17) for accepting operation input including
a playback command,
a temporarily halt command,
a fast forward command,
a fast rewind command, and
a stop command for stopping playing back of the content at a playback stop position,
**characterized by**
a playback time measurement section (12) for measuring an actual playback time of the content actually played back by an input of playback operation through the input section (17), wherein the playback time measurement section is configured to:
stop measuring the actual playback time following the inputting of any of
the temporarily halt command,
the fast forward command,
the fast rewind command, and
the stop command; and
start or resume measuring the actual playback time following the inputting of
the playback command;
a resume determination section (13) for comparing a ratio of the actual playback time of the content to the predetermined playback time of the content with a predetermined first threshold value or a predetermined second threshold value greater than the predetermined first threshold value; and
a playback control section (11) for determining that a start position of the resumed playback operation is a beginning of the content if the ratio is equal to or smaller than the predetermined first threshold value or if the ratio is equal to or greater than the predetermined second threshold value, or that the start position of the resumed playback operation is the playback stop position if the ratio is greater than the predetermined first threshold value and smaller than the predetermined second threshold value.

2. The content playback apparatus according to claim 1, wherein the playback operation contains playback and playback at predetermined speed.

## Patentansprüche

1. Inhalt-Wiedergabevorrichtung, die eine Wiederaufnahme-Funktion einschließt, mit der ein Wiedergabevorgang wiederaufgenommen wird, wenn der Wiedergabevorgang unterbrochen wird, während Inhalt wiedergegeben wird, wobei die Inhalt-Wiedergabevorrichtung umfasst:
einen Wiedergabeabschnitt (16), mit dem Inhalt wiedergegeben wird, der eine vorgegebene Wiedergabezeit hat; und
einen Eingabeabschnitt (17) mit dem Betätigungs-Eingabe angenommen wird, die einschließt:
einen Befehl für Wiedergabe
einen Befehl für vorübergehendes Anhalten,
einen Befehls für schnellen Vorlauf,
einen Befehl für schnellen Rücklauf, und
einen Unterbrechungsbefehl für Unterbrechung von Wiedergabe des Inhaltes an einer Wiedergabe-Unterbrechungsposition,
**gekennzeichnet durch**
einen Abschnitt (12) zum Messen von Wiedergabezeit, mit dem eine aktuelle Wiedergabezeit des Inhaltes gemessen wird, der aktuell auf eine Eingabe einer Wiedergabe-Betätigung über den Eingabeabschnitt (17) hin wiedergegeben wird, wobei der Abschnitt zum Messen von Wiedergabezeit so konfiguriert ist, dass er:
Messen der aktuellen Wiedergabezeit unterbricht, nachdem eingegeben wurde:
der Befehl für vorübergehendes Anhalten,
der Befehl für schnellen Vorlauf,
der Befehl für schnellen Rücklauf, und
der Unterbrechungsbefehl; und
Messen der aktuellen Wiedergabezeit beginnt oder wiederaufnimmt, nachdem eingegeben wurde:
der Befehl für Wiedergabe;
einen Wiederaufnahme-Bestimmungsabschnitt (13), mit dem ein Verhältnis der aktuellen Wiedergabezeit des Inhaltes zu der vorgegebenen Wiedergabezeit des Inhaltes mit einem vorgegebenen ersten Schwellenwert oder einem vorgegebenen zweiten Schwellenwert verglichen wird, der größer ist als der vorgegebene erste Schwellenwert; und
einen Wiedergabe-Steuerabschnitt (11), mit dem bestimmt wird, dass eine Start-Position des wiederaufgenommenen Wiedergabevorgangs ein Beginn des Inhaltes ist, wenn das Verhältnis genauso groß ist wie oder kleiner als der vorgegebene erste Schwellenwert oder wenn das Verhältnis genauso groß ist wie oder größer als der vorgegebene zweite Schwellenwert, oder bestimmt wird, dass die Start-Position des wiederaufgenommenen Wiedergabevorgangs die Wiedergabe-Unterbrechungsposition ist, wenn das Verhältnis größer ist als der erste vorgegebene Schwellenwert und kleiner ist als der vorgegebene zweite Schwellenwert.

2. Inhalt-Wiedergabevorrichtung nach Anspruch 1, wobei der Wiedergabevorgang Wiedergabe und Wiedergabe bei vorgegebener Geschwindigkeit einschließt.

## Revendications

1. Dispositif de lecture de contenu incluant une fonction de reprise pour reprendre une opération de lecture si l'opération de lecture est arrêtée pendant la lecture du contenu, le dispositif de lecture comprenant :
une section de lecture (16) pour lire un contenu ayant un temps de lecture prédéterminé ; et
une section d'entrée (17) pour accepter l'entrée d'une opération incluant
une commande de lecture,
une commande d'interruption temporaire,
une commande d'avance rapide,
une commande de retour rapide, et
une commande d'arrêt pour arrêter la lecture du contenu dans une position d'arrêt de lecture,
**caractérisé par**
une section de mesure de temps de lecture (12) pour mesurer le temps de lecture réel du contenu réellement lu par une entrée d'opération de lecture par l'intermédiaire de la section d'entrée (17), dans lequel la section de mesure de temps de lecture est configurée pour :
arrêter la mesure du temps de lecture réel à la suite de l'entrée d'une commande quelconque parmi
la commande d'interruption temporaire,
la commande d'avance rapide,
la commande de retour rapide, et
la commande d'arrêt ; et
commencer ou reprendre la mesure du temps de lecture réel à la suite de l'entrée de la commande de lecture ;
une section de détermination de reprise (13) pour comparer le rapport entre le temps de lecture réel du contenu et le temps de lecture prédéterminé du contenu à une première valeur de seuil prédéterminée ou à une seconde valeur de seuil prédéterminée supérieure ou égale à la première valeur de seuil prédéterminée ; et
une section de commande de lecture (11) pour déterminer que la position de début de l'opération de lecture reprise est le début du contenu si le rapport est inférieur ou égal à la première valeur de seuil prédéterminée ou si le rapport est supérieur ou égal à la seconde valeur de seuil prédéterminée ou que la position de début de l'opération de lecture reprise est la position d'arrêt de lecture si le rapport est supérieur ou égal à la première valeur de seuil prédéterminée et inférieur à la seconde valeur de seuil prédéterminée.

2. Dispositif de lecture de contenu selon la revendication 1, dans lequel l'opération de lecture contient la lecture et la lecture à une vitesse prédéterminée.
